(19)

Europäisches
Patentamt
European
Patent Office
Office européen
des brevets

(11)  **EP 3 468 077 A1**

(12)  **EUROPEAN PATENT APPLICATION**
published in accordance with Art. 153(4) EPC

(43) Date of publication:
**10.04.2019  Bulletin 2019/15**

(21) Application number: **16906523.2**

(22) Date of filing: **27.06.2016**

(51) Int Cl.:
**H04J 11/00** (2006.01)    **H04L 1/18** (2006.01)
**H04W 28/04** (2009.01)

(86) International application number:
**PCT/CN2016/087224**

(87) International publication number:
**WO 2018/000119 (04.01.2018 Gazette 2018/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **TANG, Hao
Shenzhen
Guangdong 518129 (CN)**
• **WEI, Dongdong
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(54)    **UPLINK TRANSMISSION METHOD AND APPARATUS**

(57)    Embodiments of the present invention provide an uplink transmission method and an apparatus. When a first data packet and a second data packet are simultaneously transmitted, UE maps the first data packet to a first time-frequency resource of a time-frequency resource block, maps the second data packet to a second time-frequency resource of the time-frequency resource block, sends the first data packet and the second data packet by using different time-frequency resources of the same time-frequency resource block, and feeds back a receiving result of the first data packet and the second data packet by using a new feedback mechanism. In this way, a conflict between an initially transmitted data packet and a retransmitted data packet in an SPS scenario can be avoided, and time-frequency resources can be more effectively used.

When a first data packet and a second data packet are simultaneously transmitted, UE maps the first data packet to a first time-frequency resource, and maps the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources —— 101

The UE sends the first data packet and the second data packet to a base station by using the time-frequency resource block —— 102

The base station receives the first data packet on the first time-frequency resource, and receives the second data packet on the second time-frequency resource —— 103

The base station determines a receiving result of the first data packet and the second data packet —— 104

The base station determines a PHICH resource based on the receiving result —— 105

The base station sends, based on the receiving result, an ACK message or a NACK message by using the PHICH resource —— 106

The UE receives, on the PHICH resource, the ACK message or the NACK message sent by the base station —— 107

The UE determines, based on the PHICH resource and the ACK message or the NACK message, whether the first data packet and the second data packet are correctly received —— 108

FIG. 2

**Description**

**TECHNICAL FIELD**

Embodiments of the present invention relate to communications technologies, and in particular, to an uplink transmission method and an apparatus.

**BACKGROUND**

Semi-persistent scheduling means that in a scheduling and transmission process of a Long Term Evolution (Long Term Evolution, LTE for short) system, an evolved NodeB (evolved Node B, eNB for short) specifies, at a transmission time interval (transmission time interval, TTI for short) by using a physical downlink control channel (physical downlink control channel, PDCCH for short) scrambled by using a semi-persistent scheduling (semi persistent scheduling, SPS for short) cell radio network temporary identifier (cell radio network temporary identifier, C-RNTI for short), a radio resource (referred to as an SPS resource below) used by user equipment (user equipment, UE for short). If the UE identifies that the radio resource is an SPS resource, the UE uses the SPS resource at intervals of a fixed period to receive or send data, and the eNB does not need to reallocate a radio resource to the UE each time the UE transmits data.

Because the SPS resource has a "once allocated, used for a plurality of times" feature, the eNB does not need to deliver a radio resource to the UE at each TTI, thereby reducing overheads of the PDCCH. In an SPS scenario, because the UE periodically uses the SPS resource to send data, when the UE initially transmits a data packet, the UE may simultaneously retransmit another data packet, causing a transmission conflict.

**SUMMARY**

Embodiments of the present invention provide an uplink transmission method and an apparatus, to avoid a conflict between an initially transmitted data packet and a retransmitted data packet in an SPS scenario, and more effectively use time-frequency resources.

A first aspect of the present invention provides an uplink transmission method, including: when a first data packet and a second data packet are simultaneously transmitted, mapping, by UE, the first data packet to a first time-frequency resource, and mapping the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources; and sending, by the UE, the first data packet and the second data packet to a base station by using the time-frequency resource block. In the method, the two data packets are sent by using the different time-frequency resources of the same time-frequency resource block. In this way, a conflict between an initially transmitted data packet and a retransmitted data packet in an SPS scenario can be avoided, and time-frequency resources can be more effectively used.

Further, before the mapping, by UE, the first data packet to a first time-frequency resource, and mapping the second data packet to a second time-frequency resource, the UE generates a first check code based on an information sequence of the first data packet, generates a second check code based on an information sequence of the second data packet, adds the first check code after the information sequence of the second data packet, and adds the second check code after the information sequence of the second data packet.

Optionally, the first check code and the second check code are CRC check codes, or the first check code and the second check code are parity check codes.

Further, after the sending, by the UE, the first data packet and the second data packet to a base station by using the time-frequency resource block, the UE receives, on a PHICH resource, an acknowledgement ACK message or a negative acknowledgement NACK message sent by the base station, and determines, based on the PHICH resource and the ACK message or the NACK message, whether the first data packet and the second data packet are correctly received. In the method, a receiving result of the two data packets is fed back by using the ACK message or the NACK message. The feedback mechanism is simple.

That the UE determines, based on the PHICH resource and the ACK message or the NACK message, whether the first data packet and the second data packet are correctly received is specifically as follows:

When the PHICH resource is a PHICH resource corresponding to an index of a PRB of the first time-frequency resource, if the UE receives the ACK message, the UE determines that the first data packet and the second data packet are both correctly received; or if the UE receives the NACK message, the UE determines that the first data packet and the second data packet are both incorrectly received.

Alternatively, when the PHICH resource is a second PHICH resource corresponding to an index of a PRB of the second time-frequency resource, if the UE receives the ACK message, the UE determines that the first data packet is correctly received and the second data packet is incorrectly received; or if the UE receives the NACK message, the UE determines that the first data packet is incorrectly received and the second data packet is correctly received.

Alternatively, when the PHICH resource is a PHICH resource corresponding to an index of a PRB of the second time-frequency resource, if the UE receives the ACK message, the UE determines that the first data packet is incorrectly received and the second data packet is correctly received; or if the UE receives the NACK message, the UE determines that the first data packet is correctly received and the second data packet is incorrectly received.

Optionally, before the mapping, by UE, the first data packet to a first time-frequency resource, the method further includes: receiving, by the UE, the first time-frequency resource that is used for transmitting the first data packet and that is indicated by the base station by using a PDCCH; or, receiving, by the UE, the first time-frequency resource that is used for transmitting the first data packet and that is indicated by the base station by using a PDCCH scrambled by using an SPS C-RNTI.

Optionally, the sending, by the UE, the first data packet and the second data packet to a base station by using the time-frequency resource block is specifically: sending, by the UE, the first data packet and the second data packet to the base station by using a transmission time interval TTI bundling resource.

Optionally, the method provided by the first aspect of the present invention is applied to an SPS scenario, before the UE transmits the first data packet and the second data packet, the UE receives an SPS activated indication message sent by the base station, and activates an SPS transmission mode based on the SPS activated indication message. In the SPS scenario, the first data packet is a retransmitted data packet, and the second data packet is an initially transmitted data packet.

A second aspect of the present invention provides an uplink transmission method, including: receiving, by a bases station on a first time-frequency resource, a first data packet sent by UE, and receiving, on a second time-frequency resource, a second data packet sent by the UE, where the first time-frequency resource and the second time-frequency resource belong to a same time-frequency resource block, and the first time-frequency resource and the second time-frequency resource have a same time domain resource and non-overlapping frequency domain resources; then, determining, by the base station, a receiving result of the first data packet and the second data packet; determining a PHICH resource based on the receiving result; and sending, based on the receiving result, an ACK message or a NACK message by using the PHICH resource.

Optionally, before the determining, by the base station, a receiving result of the first data packet and the second data packet, the base station stores the first data packet in a first HAQR buffer of a HARQ process, and stores the second data packet in a second HAQR buffer of the HARQ process.

Optionally, the determining, by the base station, a receiving result of the first data packet and the second data packet is specifically: separately decoding, by the base station, the received first data packet and second data packet; obtaining, by the base station, a first check code from the decoded first data packet, and obtaining a second check code from the decoded second data packet; and verifying, based on the first check code, whether the first data packet is correctly received, and verifying, based on the second check code, whether the second data packet is correctly received.

Optionally, the first check code and the second check code are CRC check codes, or the first check code and the second check code are parity check codes.

Optionally, the determining, by the base station, a PHICH resource based on the receiving result is specifically: when the first data packet and the second data packet are both correctly received or are both incorrectly received, determining, by the base station, the PHICH resource based on an index of a start physical resource block PRB of the first time-frequency resource. Correspondingly, the sending, by the base station based on the receiving result, an ACK message or a NACK message by using the PHICH resource is specifically: when the first data packet and the second data packet are both correctly received, sending the ACK message by using the PHICH resource; or when the first data packet and the second data packet are both incorrectly received, sending the NACK message by using the PHICH resource.

Optionally, the determining, by the base station, a PHICH resource based on the receiving result is specifically: when the first data packet is correctly received and the second data packet is incorrectly received, or when the first data packet is incorrectly received and the second data packet is correctly received, determining, by the base station, the PHICH resource based on an index of a start physical resource block PRB of the second time-frequency resource. Correspondingly, the sending, by the base station based on the receiving result, an ACK message or a NACK message by using the PHICH resource is specifically: when the first data packet is correctly received and the second data packet is incorrectly received, sending the ACK message by using the PHICH resource, or when the first data packet is incorrectly received and the second data packet is correctly received, sending the NACK message by using the PHICH resource; or, when the first data packet is incorrectly received and the second data packet is correctly received, sending the ACK message by using the PHICH resource, or when the first data packet is correctly received and the second data packet is incorrectly received, sending the NACK message by using the PHICH resource.

Optionally, before the receiving, by a base station on a first time-frequency resource, a first data packet sent by UE, the method further includes: indicating, by the base station by using a PDCCH, the first time-frequency resource used for transmitting the first data packet; or, indicating, by the base station by using a PDCCH scrambled by using an SPS C-RNTI, the first time-frequency resource used for transmitting the first data packet.

When the method of the second aspect of the present invention is applied to an SPS scenario, before performing the foregoing method, the base station sends an SPS activated indication message to the UE, to activate SPS.

A third aspect of the present invention provides UE. The UE includes a processing module and a sending module.

The processing module is configured to: when a first data packet and a second data packet are simultaneously transmitted, map the first data packet to a first time-frequency resource, and map the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources.

The sending module is configured to send the first data packet and the second data packet to a base station by using the time-frequency resource block.

Further, before mapping the first data packet to the first time-frequency resource and mapping the second data packet to the second time-frequency resource, the processing module is further configured to: generate a first check code based on an information sequence of the first data packet, generate a second check code based on an information sequence of the second data packet, add the first check code after the information sequence of the second data packet, and add the second check code after the information sequence of the second data packet.

Optionally, the first check code and the second check code are CRC check codes, or the first check code and the second check code are parity check codes.

Further, the UE further includes:

a receiving module, configured to receive, on a PHICH resource, an acknowledgement ACK message or a negative acknowledgement NACK message sent by the base station.

The processing module is further configured to determine, based on the PHICH resource and the ACK message or the NACK message, whether the first data packet and the second data packet are correctly received.

Optionally, the processing module is specifically configured to:

when the PHICH resource is a PHICH resource corresponding to an index of a start physical resource block PRB of the first time-frequency resource, if the UE receives the ACK message, determine that the first data packet and the second data packet are both correctly received; or if the UE receives the NACK message, determine that the first data packet and the second data packet are both incorrectly received; or

when the PHICH resource is a second PHICH resource corresponding to an index of a start physical resource block PRB of the second time-frequency resource, if the UE receives the ACK message, determine that the first data packet is correctly received and the second data packet is incorrectly received; or if the UE receives the NACK message, determine that the first data packet is incorrectly received and the second data packet is correctly received; or

when the PHICH resource is a PHICH resource corresponding to an index of a start physical resource block PRB of the second time-frequency resource, if the UE receives the ACK message, determine that the first data packet is incorrectly received and the second data packet is correctly received; or if the UE receives the NACK message, determine that the first data packet is correctly received and the second data packet is incorrectly received.

Optionally, the receiving module is further configured to:

receive the first time-frequency resource that is used for transmitting the first data packet and that is indicated by the base station by using a physical downlink control channel PDCCH; or

receive the first time-frequency resource that is used for transmitting the first data packet and that is indicated by the base station by using a physical downlink control channel PDCCH scrambled by using a semi-persistent scheduling cell radio network temporary identifier SPS C-RNTI.

Optionally, the sending module is specifically configured to send the first data packet and the second data packet to the base station by using a TTI bundling resource.

Optionally, the receiving module is further configured to receive a semi-persistent scheduling SPS activated indication message sent by the base station. Correspondingly, the processing module is further configured to activate an SPS transmission mode based on the SPS activated indication message.

A fourth aspect of the present invention provides a base station. The base station includes:

a receiving module, configured to: receive, on a first time-frequency resource, a first data packet sent by UE, and receive, on a second time-frequency resource, a second data packet sent by the UE, where the first time-frequency resource and the second time-frequency resource belong to a same time-frequency resource block, and the first time-frequency resource and the second time-frequency resource have a same time domain resource and non-overlapping frequency domain resources;

a processing module, configured to determine a receiving result of the first data packet and the second data packet, where

the processing module is further configured to determine a physical hybrid automatic repeat request indicator channel PHICH resource based on the receiving result; and

a sending module, configured to send, based on the receiving result, an acknowledgement ACK message or a negative acknowledgement NACK message by using the PHICH resource.

Optionally, the base station further includes:
a storage module, configured to: after the receiving module receives the first data packet and the second data packet, store the first data packet in a first HAQR buffer of a HARQ process, and store the second data packet in a second HAQR buffer of the HARQ process.

Optionally, that the processing module determines a receiving result of the first data packet and the second data packet is specifically: separately decoding the received first data packet and second data packet; obtaining a first check code from the decoded first data packet, and obtaining a second check code from the decoded second data packet; and verifying, based on the first check code, whether the first data packet is correctly received, and verifying, based on the second check code, whether the second data packet is correctly received.

Optionally, the first check code and the second check code are CRC check codes, or the first check code and the second check code are parity check codes.

Optionally, when determining the physical hybrid automatic repeat request indicator channel PHICH resource based on the receiving result, the processing module is specifically configured to: when the first data packet and the second data packet are both correctly received or are both incorrectly received, determine the PHICH resource based on an index of a start physical resource block PRB of the first time-frequency resource. Correspondingly, the sending module is specifically configured to: when the first data packet and the second data packet are both correctly received, send the ACK message by using the PHICH resource; or when the first data packet and the second data packet are both incorrectly received, send the NACK message by using the PHICH resource.

Optionally, when determining the physical hybrid automatic repeat request indicator channel PHICH resource based on the receiving result, the processing module is specifically configured to: when the first data packet is correctly received and the second data packet is incorrectly received, or when the first data packet is incorrectly received and the second data packet is correctly received, determine the PHICH resource based on an index of a start physical resource block PRB of the second time-frequency resource. Correspondingly, the sending module is specifically configured to: when the first data packet is correctly received and the second data packet is incorrectly received, send the ACK message by using the PHICH resource, or when the first data packet is incorrectly received and the second data packet is correctly received, send the NACK message by using the PHICH resource; or when the first data packet is incorrectly received and the second data packet is correctly received, send the ACK message by using the PHICH resource, or when the first data packet is correctly received and the second data packet is incorrectly received, send the NACK message by using the PHICH resource.

Optionally, the sending module is further configured to: indicate, by using a physical downlink control channel PDCCH, the first time-frequency resource used for transmitting the first data packet; or indicate, by using a physical downlink control channel PDCCH scrambled by using a semi-persistent scheduling cell radio network temporary identifier SPS C-RNTI, the first time-frequency resource used for transmitting the first data packet.

Optionally, when the base station is applied to an SPS scenario, the sending module is further configured to send a semi-persistent scheduling SPS activated indication message to the UE.

A fifth aspect of the present invention provides UE. The UE includes a processor and a transmitter. The processor is configured to: when a first data packet and a second data packet are simultaneously transmitted, map the first data packet to a first time-frequency resource, and map the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources. The transmitter is configured to send the first data packet and the second data packet to a base station by using the time-frequency resource block.

Further, before mapping the first data packet to the first time-frequency resource and mapping the second data packet to the second time-frequency resource, the processor is further configured to: generate a first check code based on an information sequence of the first data packet, generate a second check code based on an information sequence of the second data packet, add the first check code after the information sequence of the second data packet, and add the second check code after the information sequence of the second data packet.

Optionally, the first check code and the second check code are CRC check codes, or the first check code and the second check code are parity check codes.

Further, the UE further includes a receiver. The receiver is configured to receive, on a physical hybrid automatic repeat request indicator channel PHICH resource, an acknowledgement ACK message or a negative acknowledgement NACK message sent by the base station. Correspondingly, the processor is further configured to determine, based on the PHICH resource and the ACK message or the NACK message, whether the first data packet and the second data packet are correctly received.

Optionally, the processor is specifically configured to:

when the PHICH resource is a PHICH resource corresponding to an index of a start physical resource block PRB of the first time-frequency resource, if the receiver receives the ACK message, determine that the first data packet and the second data packet are both correctly received; or if the receiver receives the NACK message, determine that the first data packet and the second data packet are both incorrectly received; or

when the PHICH resource is a second PHICH resource corresponding to an index of a start physical resource block PRB of the second time-frequency resource, if the receiver receives the ACK message, determine that the first data packet is correctly received and the second data packet is incorrectly received; or if the receiver receives the NACK message, determine that the first data packet is incorrectly received and the second data packet is correctly received; or

when the PHICH resource is a PHICH resource corresponding to an index of a start physical resource block PRB of the second time-frequency resource, if the receiver receives the ACK message, determine that the first data packet is incorrectly received and the second data packet is correctly received; or if the receiver receives the NACK message, determine that the first data packet is correctly received and the second data packet is incorrectly received.

Optionally, the receiver is further configured to: receive the first time-frequency resource that is used for transmitting the first data packet and that is indicated by the base station by using a physical downlink control channel PDCCH; or receive the first time-frequency resource that is used for transmitting the first data packet and that is indicated by the base station by using a PDCCH scrambled by using a semi-persistent scheduling cell radio network temporary identifier SPS C-RNTI.

Optionally, the transmitter is specifically configured to: send the first data packet and the second data packet to the base station by using a transmission time interval TTI bundling resource.

Optionally, the receiver is further configured to receive a semi-persistent scheduling SPS activated indication message sent by the base station. Correspondingly, the processor is further configured to activate an SPS transmission mode based on the SPS activated indication message.

A sixth aspect of the present invention provides a base station, including:

a receiver, configured to: receive, on a first time-frequency resource, a first data packet sent by UE, and receive, on a second time-frequency resource, a second data packet sent by the UE, where the first time-frequency resource and the second time-frequency resource belong to a same time-frequency resource block, and the first time-frequency resource and the second time-frequency resource have a same time domain resource and non-overlapping frequency domain resources;

a processor, configured to determine a receiving result of the first data packet and the second data packet, where the processor is further configured to determine a physical hybrid automatic repeat request indicator channel PHICH resource based on the receiving result; and

a transmitter, configured to send, based on the receiving result, an ACK message or a NACK message by using the PHICH resource.

Optionally, the base station further includes:

a memory, configured to: after the receiver receives the first data packet and the second data packet, store the first data packet in a first HAQR buffer of a HARQ process, and store the second data packet in a second HAQR buffer of the HARQ process.

Optionally, when determining the receiving result of the first data packet and the second data packet, the processor is specifically configured to: separately decode the received first data packet and second data packet; obtain a first check code from the decoded first data packet, and obtain a second check code from the decoded second data packet; and verify, based on the first check code, whether the first data packet is correctly received, and verify, based on the second check code, whether the second data packet is correctly received.

Optionally, when determining the physical hybrid automatic repeat request indicator channel PHICH resource based on the receiving result, the processor is specifically configured to: when the first data packet and the second data packet are both correctly received or are both incorrectly received, determine the PHICH resource based on an index of a start physical resource block PRB of the first time-frequency resource. Correspondingly, the transmitter is specifically configured to: when the first data packet and the second data packet are both correctly received, send the ACK message by using the PHICH resource; or when the first data packet and the second data packet are both incorrectly received, send the NACK message by using the PHICH resource.

Optionally, when determining the physical hybrid automatic repeat request indicator channel PHICH resource based on the receiving result, the processor is specifically configured to: when the first data packet is correctly received and the second data packet is incorrectly received, or when the first data packet is incorrectly received and the second data packet is correctly received, determine the PHICH resource based on an index of a start physical resource block PRB of the second time-frequency resource. Correspondingly, the transmitter is specifically configured to: when the first data packet is correctly received and the second data packet is incorrectly received, send the ACK message by using the PHICH resource, or when the first data packet is incorrectly received and the second data packet is correctly received, send the NACK message by using the PHICH resource; or when the first data packet is incorrectly received and the second data packet is correctly received, send the ACK message by using the PHICH resource, or when the first data packet is correctly received and the second data packet is incorrectly received, send the NACK message by using the PHICH resource.

Optionally, the transmitter is further configured to: indicate, by using a physical downlink control channel PDCCH, the first time-frequency resource used for transmitting the first data packet; or indicate, by using a physical downlink control channel PDCCH scrambled by using a semi-persistent scheduling cell radio network temporary identifier SPS C-RNTI, the first time-frequency resource used for transmitting the first data packet.

Optionally, the transmitter is further configured to send a semi-persistent scheduling SPS activated indication message to the UE.

According to the uplink transmission method and the apparatus provided in the embodiments of the present invention, when the first data packet and the second data packet are simultaneously transmitted, the UE maps the first data packet to the first time-frequency resource of the time-frequency resource block, maps the second data packet to the second time-frequency resource of the time-frequency resource block, sends the first data packet and the second data packet by using the different time-frequency resources of the same time-frequency resource block, and feeds back the receiving result of the first data packet and the second data packet by using a new feedback mechanism. In this way, a conflict between an initially transmitted data packet and a retransmitted data packet in an SPS scenario can be avoided, and time-frequency resources can be more effectively used. Persons skilled in the art may understand that the technical solutions of the present invention can be applied not only in the SPS scenario but also in another scenario in which a plurality of data packets need to be transmitted on a same time-frequency resource block.

**BRIEF DESCRIPTION OF DRAWINGS**

To describe the technical solutions in embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may derive other drawings from these accompanying drawings without creative efforts.

FIG. 1 is a schematic architectural diagram of an application scenario according to an embodiment of the present invention;
FIG. 2 is a flowchart of an uplink data transmission method according to Embodiment 1 of the present invention;
FIG. 3 is a schematic diagram of a time-frequency resource block;
FIG. 4 is a schematic structural diagram of UE according to Embodiment 2 of the present invention;
FIG. 5 is a schematic structural diagram of a base station according to Embodiment 3 of the present invention;
FIG. 6 is a schematic structural diagram of UE according to Embodiment 4 of the present invention; and
FIG. 7 is a schematic structural diagram of a base station according to Embodiment 5 of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

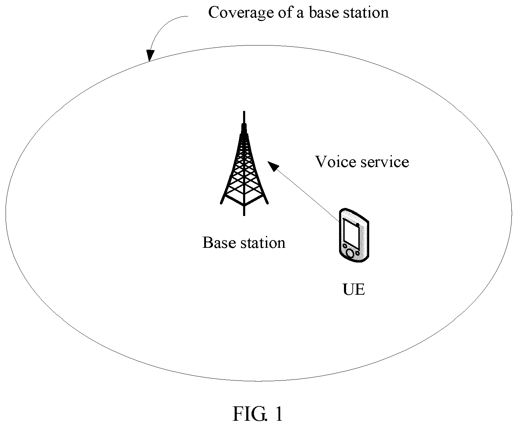

A method in the embodiments of the present invention is applied to uplink transmission of an LTE system or an LTE-Advanced (LTE-Advanced, LTE-A for short) system. The following embodiments are described by using an LTE system as an example. FIG. 1 is a schematic architectural diagram of an application scenario according to an embodiment of the present invention. As shown in FIG. 1, the LTE system includes a base station and UE. There may be one or more UEs within coverage of the base station. A quantity of UEs is not limited in the present invention. The UE may also be referred to as a terminal (terminal), a mobile station (mobile station, MS for short), a mobile terminal (mobile terminal), or the like. The UE may be a mobile phone (or referred to as a "cellular" phone), a computer with a mobile terminal, or the like. The UE may alternatively be a portable, pocket-sized, handheld, computer built-in, or in-vehicle mobile apparatus that exchange voice or data with a core network of the LTE system.

The UE performs uplink transmission on a physical uplink shared channel (physical uplink shared channel, PUSCH for short). When uplink data transmission fails, the UE needs to retransmit the uplink data. The LTE system performs data retransmission by using a hybrid automatic repeat request (hybrid automatic repeat request, HARQ for short) protocol. In HARQ, a stop-and-wait protocol (stop-and-wait protocol) is used to send data. In the stop-and-wait protocol, after sending a transport block (transport block, TB for short), a transmit end waits for feedback information sent by a receive end. The receive end responds to the TB with an acknowledgement (acknowledgement, ACK for short) or a negative acknowledgement (negative acknowledgement, NACK for short) by using 1-bit information. One TB is to be transmitted at one transmission time interval (transmission time interval, TTI for short). The TTI is a unit for HARQ retransmission.

For synchronous retransmission, a subframe in which the base station feeds back an ACK/a NACK message is determined. FIG. 1 is a schematic diagram of transmission of a TB. A frequency division duplex (frequency division dual, FDD for short) system is used as an example for description. As shown in FIG. 1, the UE sends a TB in a subframe 0. If the base station correctly receives the TB, the base station sends an ACK message to the UE in a subframe 4; or if the base station does not correctly receive the TB, the base station feeds back a NACK message to the UE in a subframe 4. If the UE receives the NACK message, the UE retransmits the TB in a subframe 8. It can be learned from FIG. 1 that there are eight subframes (namely, 8 ms) between retransmission and initial transmission of each TB.

Synchronous retransmission of the uplink data includes synchronous adaptive retransmission and synchronous non-adaptive retransmission. For the synchronous adaptive retransmission, the base station performs, by using a physical downlink control channel (physical downlink control channel, PDCCH for short), feedback on the uplink data sent by the UE. For the non-adaptive retransmission, the base station performs, by using a physical HARQ indicator channel (physical hybrid-ARQ indicator channel, PHICH for short), feedback on the uplink data sent by the UE. The UE needs to determine a PHICH resource that is used by the base station to feed back an ACK/a NACK message for the uplink data of the UE. A frequency division duplex (frequency division dual, FDD for short) system is used as an example for description. The UE sends a TB in a subframe n. The base station feeds back an ACK/a NACK message in a subframe n+4 by using a PHICH. The UE needs to detect the PHICH in the subframe n+4. A frequency domain resource used by the PHICH is determined by using a 2-tuple $\left(n_{\text{PHICH}}^{\text{group}}, n_{\text{PHICH}}^{\text{seq}}\right)$. $n_{PHICH}^{group}$ indicates a number of a PHICH group. $n_{PHICH}^{seq}$ indicates a sequence number of an orthogonal sequence in the PHICH group. Calculation formulas of $n_{PHICH}^{group}$ and $n_{PHICH}^{seq}$ are as follows:

$$n_{PHICH}^{group} = (I_{PRB\_RA} + n_{DMRS}) \bmod N_{PHICH}^{group} + I_{PHICH} N_{PHICH}^{group} \qquad \text{(Formula 1),}$$

and

$$n_{PHICH}^{seq} = (\lfloor I_{PRB\_RA} / N_{PHICH}^{group} \rfloor + n_{DMRS}) \bmod 2 N_{SF}^{PHICH} \qquad \text{(Formula 2).}$$

$n_{DMRS}$ is a mathematical variable determined based on a cyclic shift value of an uplink reference signal, $N_{SF}^{PHICH}$ is a spreading factor of the PHICH, and $N_{PHICH}^{group}$ is a quantity of PHICH groups. When uplink and downlink configurations of TDD are 0 and the PUSCH performs sending in a subframe 4 or 9, a value of $I_{PHICH}$ is 1. In another case, the value of $I_{PHICH}$ is 0. $I_{PRB\_RA}$ indicates a start physical resource block (physical resource block, PRB for short) of a time-frequency resource occupied by a TB that needs to be transmitted. The start PRB is a PRB with a smallest number.

After determining a PHICH resource, the UE receives, on the PHICH resource, an ACK/NACK message fed back by the base station. If the UE receives a NACK message, the UE retransmits the TB.

In the LTE system, scheduling manners of the UE include dynamic scheduling and SPS. During dynamic scheduling transmission, each time the UE transmits data, the base station needs to allocate a transmission resource to the UE. During SPS transmission, a transmission resource (an SPS resource) allocated by the base station has a "once allocated, used for a plurality of times" feature. Therefore, the base station does not need to allocate a transmission resource to the UE during each transmission. During SPS transmission, because the UE periodically uses an SPS resource to send data, when the UE initially transmits a data packet, the UE may simultaneously retransmit another data packet. In other words, an initially transmitted data packet and a retransmitted data packet need to occupy a same time-frequency resource. In the prior art, if two data packets need to be sent on a same time-frequency resource, the transmit end uses the two data packet as a whole for encoding, checking, modulation, and mapping to the time-frequency resource. When the two data packets are used as a whole for transmission on the same time-frequency resource, because content of the initially transmitted data packet is different from that of the retransmitted data packet, the base station on the receive end cannot use a HARQ buffer originally storing the retransmitted data packet for joint decoding, causing a low decoding success rate.

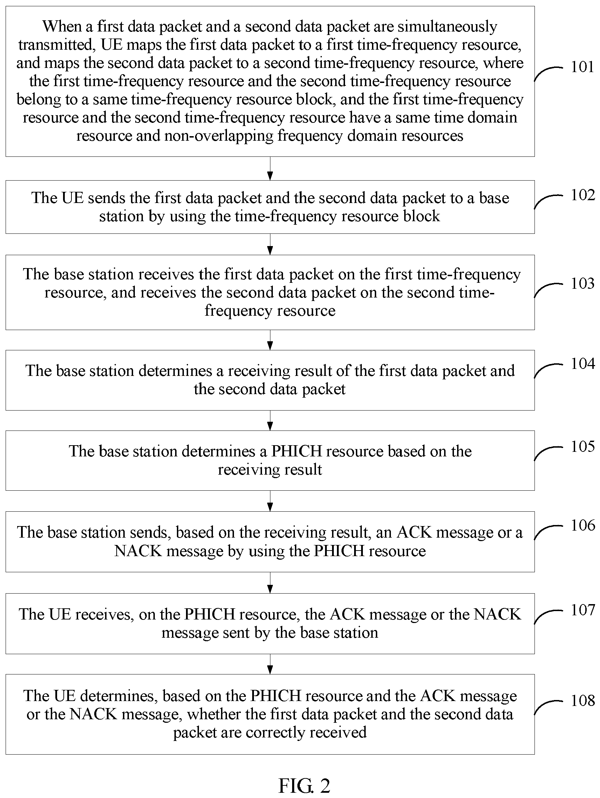

To resolve the foregoing problem, Embodiment 1 of the present invention provides an uplink data transmission method. FIG. 2 is a flowchart of the uplink data transmission method provided by Embodiment 1 of the present invention. As shown in FIG. 2, the method provided in this embodiment includes the following steps.

Step 101. When a first data packet and a second data packet are simultaneously transmitted, UE maps the first data packet to a first time-frequency resource, and maps the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources.

Step 102. The UE sends the first data packet and the second data packet to a base station by using the time-frequency resource block.

Step 103. The base station receives the first data packet on the first time-frequency resource, and receives the second data packet on the second time-frequency resource.

Step 104. The base station determines a receiving result of the first data packet and the second data packet.

Step 105. The base station determines a PHICH resource based on the receiving result.

Step 106. The base station sends, based on the receiving result, an ACK message or a NACK message by using the PHICH resource.

Step 107. The UE receives, on the PHICH resource, the ACK message or the NACK message sent by the base station.

Step 108. The UE determines, based on the PHICH resource and the ACK message or the NACK message, whether the first data packet and the second data packet are correctly received.

In this embodiment, the time-frequency resource block occupies consecutive subcarriers in frequency domain, and occupies a particular time in time domain. One or more TBs are mapped in the time-frequency resource block. This is not limited herein.

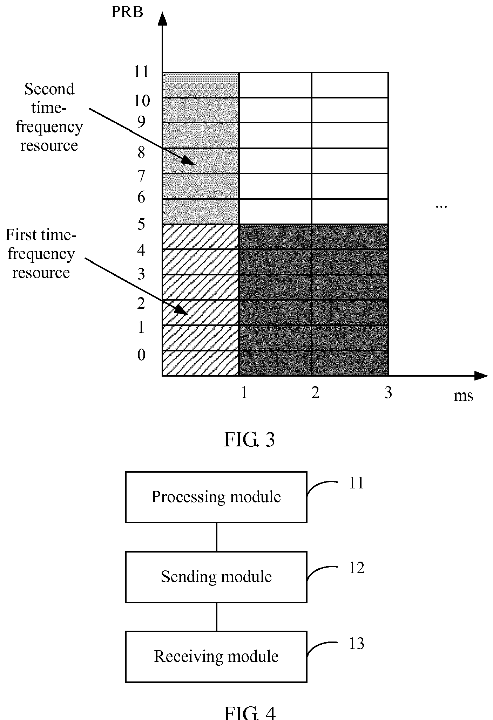

In step 101, the time-frequency resource block includes the first time-frequency resource and the second time-frequency resource, and the first data packet and the second data packet are respectively transmitted on the two different time-frequency resources of the time-frequency resource block. The first time-frequency resource and the second time-frequency resource have the same time domain resource and the non-overlapping frequency domain resources. A size of the first time-frequency resource may be the same as or different from that of the second time-frequency resource. FIG. 3 is a schematic diagram of a time-frequency resource block. As shown in FIG. 3, the time-frequency resource block occupies 12 consecutive PRBs in frequency domain, and occupies one subframe, namely, 1 millisecond (ms) in time domain. In an example shown in FIG. 3, a part filled by oblique lines indicates the first time-frequency resource, and a part filled in gray indicates the second time-frequency resource. The first time-frequency resource occupies PRBs numbered 0 to 5 in frequency domain, and the second time-frequency resource occupies PRBs numbered 6 to 11 in frequency domain. The first time-frequency resource and the second time-frequency resource occupy a size of one subframe in time domain. Certainly, alternatively, the second time-frequency resource occupies PRBs numbered 0 to 5 in frequency domain, and the first time-frequency resource occupies PRBs numbered 6 to 11 in frequency domain. It should be noted that the example shown in FIG. 3 is merely a time-frequency resource block size that is defined in an LTE system. As a network architecture evolves and a new application scenario emerges, for example, a 5th generation mobile communications (the 5th Generation mobile communication technology, 5G for short) network or a new radio access technical (new radio access technical, New RAT or NR for short) network, the time-frequency resource block may have a new definition. For example, the time-frequency resource block may include more PRBs, or a longer or shorter occupied time in time domain. This is not limited in the present invention.

The method of this embodiment may be applied to a scheduling transmission mode, or may be applied to an SPS transmission mode. When the method of this embodiment is applied to the scheduling transmission mode, the first time-frequency resource and the second time-frequency resource may be indicated by the base station by using a PDCCH. When the method of this embodiment is applied to the SPS transmission mode, the first time-frequency resource and the second time-frequency resource may be indicated by the base station by using a PDCCH scrambled by an SPS C-RNTI. Correspondingly, before the UE receives a transmission resource indicated by the base station by using the PDCCH scrambled by the SPS C-RNTI, the UE receives an SPS activated indication message sent by the base station, and activates the SPS transmission mode based on the SPS activated indication message. In the SPS transmission mode, the first time-frequency resource and the second time-frequency resource have a "once allocated, used for a plurality of times" feature. The base station does not need to reallocate the first time-frequency resource and the second time-frequency resource to the UE during each transmission.

Before mapping the first data packet and the second data packet to the time-frequency resources, the UE further needs to perform error control on the first data packet and the second data packet. In an example of the first data packet, the UE is used as a transmit end of the first data packet, generates a check code of an information code sequence according to an encoding rule based on the information code sequence. After generating the check code, the UE adds the check code after the information code sequence. The check code is classified as an error detection code or an error correction code based on different functions. The error detection code is a code for automatically finding an error. The error correction code is a code for finding an error and automatically correcting the error. A commonly used error control method includes a parity check and a cyclic redundancy check (cyclic redundancy check, CRC for short). In a parity check method, a check code generated by the transmit end is a parity code. In a cyclic redundancy check method, a check code generated by the transmit end is a cyclic redundancy code. After performing error control on the first data packet and the second data packet, the UE performs channel encoding and modulation on the first data packet and the second data packet, maps the first data packet and the second data packet to the different time-frequency resources of the same time-frequency resource block, and then sends the first data packet and the second data packet to the base station by using the time-frequency resource block.

In step 103, the base station needs to set two HARQ buffers for each HARQ process. One HARQ buffer is used to store the first data packet, and the other HARQ buffer is used to store the second data packet. In this embodiment, an objective that the base station sets the two HARQ buffers for each HARQ is mainly that a decoding mechanism of the base station determines that for a data packet in a HARQ mechanism, the base station stores received data when decoding fails, requests the transmit end to retransmit the data packet, subsequently combines the retransmitted data packet and previously received data, and then performs decoding. The decoding manner can improve a diversity gain, reduce a retransmission quantity, and further reduce a delay. Because the base station needs to store a receiving result and combine retransmitted data during the decoding, the base station cannot store different data packets in a same HARQ buffer. Therefore, the HARQ buffer is set for each of the two different data packets.

In step 104, specifically, the base station performs demodulation, channel decoding, and error checking on the received first data packet and second data packet, and determines the receiving result of the first data packet and the second data packet based on an error checking result. There are four receiving results of the first data packet and the second data packet: Both the first data packet and the second data packet are correctly received; both the first data packet and the second data packet are incorrectly received; the first data packet is correctly received, and the second data packet is incorrectly received; and the first data packet is incorrectly received, and the second data packet is correctly received.

In this embodiment, the UE on the transmit end separately performs error control on the first data packet and the second data packet. Correspondingly, the base station on a receive end separately performs error verification on the first data packet and the second data packet, to determine the receiving result. The base station may specifically determine the receiving result in the following manner: The base station decodes the received first data packet and second data packet; then obtains a first check code from the decoded first data packet, and obtains a second check code from the decoded second data packet; and further verifies, based on the first check code, whether the first data packet is correctly received, and verifies, based on the second check code, whether the second data packet is correctly received. Specifically, the base station verifies, based on the first check code, whether an information sequence of the first data packet is correct, and if the information sequence of the first data packet is correct, determines that the first data packet is correctly received; or if the information sequence of the first data packet is incorrect, determines that the first data packet is incorrectly received. Similarly, the base station verifies, based on the second check code, whether an information sequence of the second data packet is correct, and if the information sequence of the second data packet is correct, determines that the second data packet is correctly received; or if the information sequence of the second data packet is incorrect, determines that the second data packet is incorrectly received.

In step 105, one PHICH resource can feed back only two receiving results. Four receiving results need two PHICH resources. The base station needs to determine, based on a receiving result, a PHICH resource that is to be used to feed back the receiving result. Specifically, when the first data packet and the second data packet are both correctly received or are both incorrectly received, the base station determines the PHICH resource based on an index of a start PRB of the first time-frequency resource. Correspondingly, when the first data packet is correctly received and the second data packet is incorrectly received, or when the first data packet is incorrectly received and the second data packet is correctly received, the base station determines the PHICH resource based on an index of a start PRB of the second time-frequency resource.

For example, the base station determines the PHICH resource based on the index of the start PRB of the first time-frequency resource. In a manner, the base station puts the index of the start PRB of the first time-frequency resource into Formula 1 and Formula 2 for calculation, to obtain the PHICH resource. In another implementation, the base station or another network device obtains the PHICH resource in advance through calculation based on Formula 1 and Formula 2, and stores a correspondence between the index of the start PRB of the first time-frequency resource and the PHICH into a table. Subsequently, when a PHICH resource needs to be determined, the base station searches the table based on the index of the start PRB of the first time-frequency resource, to obtain the PHICH resource. The base station determines a PHICH resource based on the index of the start PRB of the second time-frequency resource by using a same method.

In step 106, specifically, when the first data packet and the second data packet are both correctly received, the base station sends an ACK message by using the PHICH resource corresponding to the index of the start PRB of the first time-frequency resource. When the first data packet and the second data packet are both incorrectly received, the base station sends a NACK message by using the PHICH resource corresponding to the index of the start PRB of the first time-frequency resource. Correspondingly, when the first data packet is correctly received and the second data packet is incorrectly received, the base station sends an ACK message by using the PHICH resource corresponding to the index of the start PRB of the second time-frequency resource. When the first data packet is incorrectly received and the second data packet is correctly received, the base station sends a NACK message by using the PHICH resource corresponding to the index of the start PRB of the second time-frequency resource. Alternatively, when the first data packet is incorrectly received and the second data packet is correctly received, the base station sends an ACK message by using the PHICH resource corresponding to the index of the start PRB of the second time-frequency resource. When the first data packet is correctly received and the second data packet is incorrectly received, the base station sends a NACK message by using the PHICH resource corresponding to the index of the start PRB of the second time-frequency resource.

In step 107, specifically, the UE separately receives, in a blind detection manner, on the PHICH resource corresponding to the index of the start PRB of the first time-frequency resource and the PHICH resource corresponding to the index of the start PRB of the second time-frequency resource, feedback information sent by the base station. It may be understood that the UE also needs to determine the PHICH resource based on the index of the start PRB of the first time-frequency resource and determine the PHICH resource based on the index of the start PRB of the second time-frequency resource. The UE may determine the PHICH resource by using a method the same as that used by the base station. Details are not described herein again.

In step 108, specifically, when the UE receives the feedback information on the PHICH resource corresponding to the index of the start PRB of the first time-frequency resource, if the UE receives the ACK message, the UE determines that the first data packet and the second data packet are both correctly received; or if the UE receives the NACK message, the UE determines that the first data packet and the second data packet are both incorrectly received. When the UE receives the feedback information on the PHICH resource corresponding to the index of the start PRB of the second time-frequency resource, if the UE receives the ACK message, the UE determines that the first data packet is correctly received and the second data packet is incorrectly received; or if the UE receives the NACK message, the UE determines that the first data packet is incorrectly received and the second data packet is correctly received. Alternatively, when the UE receives the feedback information on the PHICH resource corresponding to the index of the start PRB of the second time-frequency resource, if the UE receives the ACK message, the UE determines that the first data packet is incorrectly received and the second data packet is correctly received; or if the UE receives the NACK message, the UE determines that the first data packet is correctly received and the second data packet is incorrectly received.

In another implementation of the present invention, optionally, in step 105, when the first data packet and the second data packet are both correctly received or are both incorrectly received, the base station may alternatively determine the PHICH resource based on the index of the start PRB of the second time-frequency resource. Correspondingly, when the first data packet is correctly received and the second data packet is incorrectly received, or when the first data packet is incorrectly received and the second data packet is correctly received, the base station determines the PHICH resource based on the index of the start PRB of the first time-frequency resource.

Correspondingly, in step 106, when the first data packet and the second data packet are both correctly received, the base station sends an ACK message by using the PHICH resource corresponding to the index of the start PRB of the second time-frequency resource. When the first data packet and the second data packet are both incorrectly received, the base station sends a NACK message by using the PHICH resource corresponding to the index of the start PRB of the second time-frequency resource. When the first data packet is correctly received and the second data packet is incorrectly received, the base station sends an ACK message by using the PHICH resource corresponding to the index of the start PRB of the first time-frequency resource. When the first data packet is incorrectly received and the second data packet is correctly received, the base station sends a NACK message by using the PHICH resource corresponding to the index of the start PRB of the first time-frequency resource. Alternatively, when the first data packet is incorrectly received and the second data packet is correctly received, the base station sends an ACK message by using the PHICH resource corresponding to the index of the start PRB of the first time-frequency resource. When the first data packet is correctly received and the second data packet is incorrectly received, the base station sends a NACK message by using the PHICH resource corresponding to the index of the start PRB of the first time-frequency resource.

Correspondingly, in step 108, specifically, when the UE receives the feedback information on the PHICH resource corresponding to the index of the start PRB of the second time-frequency resource, if the UE receives the ACK message, the UE determines that the first data packet and the second data packet are both correctly received; or if the UE receives the NACK message, the UE determines that the first data packet and the second data packet are both incorrectly received. When the UE receives the feedback information on the PHICH resource corresponding to the index of the start PRB of the first time-frequency resource, if the UE receives the ACK message, the UE determines that the first data packet is correctly received and the second data packet is incorrectly received; or if the UE receives the NACK message, the UE determines that the first data packet is incorrectly received and the second data packet is correctly received. Alternatively, when the UE receives the feedback information on the PHICH resource corresponding to the index of the start PRB of the first time-frequency resource, if the UE receives the ACK message, the UE determines that the first data packet is incorrectly received and the second data packet is correctly received; or if the UE receives the NACK message, the UE determines that the first data packet is correctly received and the second data packet is incorrectly received.

In this embodiment, when the first data packet and the second data packet are simultaneously transmitted, the UE maps the first data packet to the first time-frequency resource of the time-frequency resource block, maps the second data packet to the second time-frequency resource of the time-frequency resource block, sends the first data packet and the second data packet by using the different time-frequency resources of the same time-frequency resource block, and feeds back the receiving result of the first data packet and the second data packet by using a new feedback mechanism. In this way, a conflict between an initially transmitted data packet and a retransmitted data packet in an SPS scenario can be avoided, and time-frequency resources can be more effectively used.

It should be noted that the method of Embodiment 1 may be applied to an SPS transmission mode, and may be applied to any scenario in which a plurality of data packets need to be simultaneously transmitted. In the SPS transmission mode, when retransmission of the first data packet and initial transmission of the second data packet occupy a same time-frequency resource block, the method of this embodiment may be used to avoid a data conflict. A time-frequency resource used for retransmitting the first data packet is the first time-frequency resource of the time-frequency resource block. Before retransmitting the first data packet, the base station may indicate, by using the PDCCH, the first time-frequency resource used for retransmitting the first data packet, or the base station indicates, by using the PDCCH scrambled by using the SPS C-RNTI, the first time-frequency resource used for retransmitting the first data packet. When the base station indicates the first time-frequency resource by using the PDCCH scrambled by using the SPS C-RNTI, the UE performs descrambling by using the SPS C-RNTI, and if the descrambling succeeds, determines that the first time-frequency resource is an SPS resource.

To improve uplink voice coverage, a TTI bundling (bundling) technology is provided in 3GPP. The TTI bundling encodes an entire data packet to form different redundancy versions. The different redundancy versions are to be separately transmitted in a plurality of consecutive uplink subframes. Retransmission of the TTI bundling also needs to transmit different redundancy versions of the data packet in a plurality of consecutive uplink subframes. The plurality of consecutive uplink subframes are TTI bundling resources. The method of the foregoing embodiment may also be applied to a TTI bundling scenario. Correspondingly, the UE uses the TTI bundling resources to send the first data packet and the second data packet to the base station. It is assumed that the TTI bundling resources are four consecutive uplink subframes. In this case, the UE sends the first data packet and the second data packet simultaneously in the four consecutive uplink subframes.

FIG. 4 is a schematic structural diagram of UE according to Embodiment 2 of the present invention. As shown in FIG. 4, the UE of this embodiment includes a processing module 11, a sending module 12, and a receiving module 13.

The processing module 11 is configured to: when a first data packet and a second data packet are simultaneously transmitted, map the first data packet to a first time-frequency resource, and map the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources.

The sending module 12 is configured to send the first data packet and the second data packet to a base station by using the time-frequency resource block.

The receiving module 13 is configured to receive, on a PHICH resource, an ACK message or a NACK message sent by the base station.

The processing module 11 is further configured to determine, based on the PHICH resource and the ACK message or the NACK message, whether the first data packet and the second data packet are correctly received.

Further, before mapping the first data packet to the first time-frequency resource and mapping the second data packet to the second time-frequency resource, the processing module 11 is further configured to: generate a first check code based on an information sequence of the first data packet, generate a second check code based on an information sequence of the second data packet, add the first check code after the information sequence of the second data packet, and add the second check code after the information sequence of the second data packet. Optionally, the first check code and the second check code are CRC check codes, or the first check code and the second check code are parity check codes.

Optionally, when determining, based on the PHICH resource and the ACK message or the NACK message, whether the first data packet and the second data packet are correctly received, the processing module 11 is specifically configured to:

when the PHICH resource is a PHICH resource corresponding to an index of a start physical resource block PRB of the first time-frequency resource, if the UE receives the ACK message, determine that the first data packet and the second data packet are both correctly received; or if the UE receives the NACK message, determine that the first data packet and the second data packet are both incorrectly received; or

when the PHICH resource is a second PHICH resource corresponding to an index of a start physical resource block PRB of the second time-frequency resource, if the UE receives the ACK message, determine that the first data packet is correctly received and the second data packet is incorrectly received; or if the UE receives the NACK message, determine that the first data packet is incorrectly received and the second data packet is correctly received; or

when the PHICH resource is a PHICH resource corresponding to an index of a start physical resource block PRB of the second time-frequency resource, if the UE receives the ACK message, determine that the first data packet is incorrectly received and the second data packet is correctly received; or if the UE receives the NACK message, determine that the first data packet is correctly received and the second data packet is incorrectly received.

Optionally, the receiving module 13 is further configured to: receive the first time-frequency resource that is used for transmitting the first data packet and that is indicated by the base station by using a PDCCH; or receive the first time-frequency resource that is used for transmitting the first data packet and that is indicated by the base station by using a PDCCH scrambled by using an SPS C-RNTI.

Optionally, the sending module 12 is specifically configured to send the first data packet and the second data packet to the base station by using a TTI bundling resource.

Optionally, the receiving module 13 is further configured to receive an SPS activated indication message sent by the base station. Correspondingly, the processing module is further configured to activate an SPS transmission mode based on the SPS activated indication message.

The UE provided in this embodiment may be configured to perform the method in Embodiment 1. Specific implementations and technical effects of the UE are similar to those of the method. Details are not described herein again.

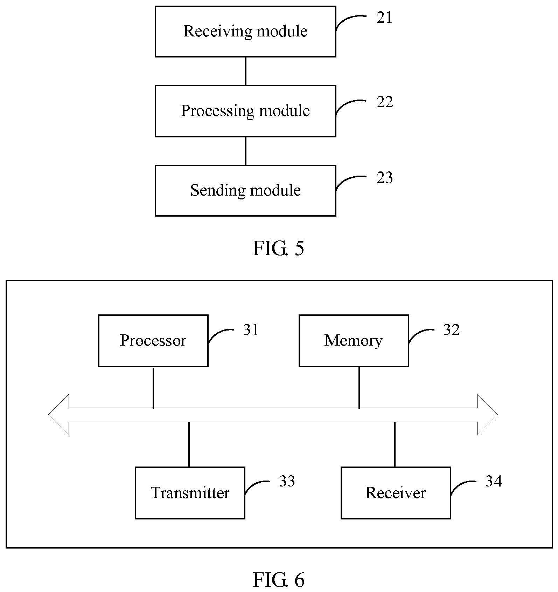

FIG. 5 is a schematic structural diagram of a base station according to Embodiment 3 of the present invention. As shown in FIG. 5, the base station of this embodiment includes a receiving module 21, a processing module 22, and a sending module 23.

The receiving module 21 is configured to: receive, on a first time-frequency resource, a first data packet sent by UE, and receive, on a second time-frequency resource, a second data packet sent by the UE, where the first time-frequency resource and the second time-frequency resource belong to a same time-frequency resource block, and the first time-frequency resource and the second time-frequency resource have a same time domain resource and non-overlapping frequency domain resources.

The processing module 22 is configured to determine a receiving result of the first data packet and the second data packet.

The processing module 22 is further configured to determine a physical hybrid automatic repeat request indicator channel PHICH resource based on the receiving result.

The sending module 23 is configured to send, based on the receiving result, an acknowledgement ACK message or a negative acknowledgement NACK message by using the PHICH resource.

Optionally, the base station further includes a storage module (not shown in FIG. 5). The storage module is configured to: after the receiving module 21 receives the first data packet and the second data packet, store the first data packet in a first HAQR buffer of a HARQ process, and store the second data packet in a second HAQR buffer of the HARQ process.

Optionally, that the processing module 22 determines a receiving result of the first data packet and the second data packet is specifically: separately decoding the received first data packet and second data packet; obtaining a first check code from the decoded first data packet, and obtaining a second check code from the decoded second data packet; and verifying, based on the first check code, whether the first data packet is correctly received, and verifying, based on the second check code, whether the second data packet is correctly received. Optionally, the first check code and the second check code are CRC check codes, or the first check code and the second check code are parity check codes.

Optionally, when determining the PHICH resource based on the receiving result, the processing module 22 is specifically configured to: when the first data packet and the second data packet are both correctly received or are both incorrectly received, determine the PHICH resource based on an index of a start PRB of the first time-frequency resource. Correspondingly, the sending module 23 is specifically configured to: when the first data packet and the second data packet are both correctly received, send the ACK message by using the PHICH resource; or when the first data packet and the second data packet are both incorrectly received, send the NACK message by using the PHICH resource.

Optionally, when determining the PHICH resource based on the receiving result, the processing module 22 is specifically configured to: when the first data packet is correctly received and the second data packet is incorrectly received, or when the first data packet is incorrectly received and the second data packet is correctly received, determine the PHICH resource based on an index of a start PRB of the second time-frequency resource. Correspondingly, the sending module 23 is specifically configured to: when the first data packet is correctly received and the second data packet is incorrectly received, send the ACK message by using the PHICH resource, or when the first data packet is incorrectly received and the second data packet is correctly received, send the NACK message by using the PHICH resource; or when the first data packet is incorrectly received and the second data packet is correctly received, send the ACK message by using the PHICH resource, or when the first data packet is correctly received and the second data packet is incorrectly received, send the NACK message by using the PHICH resource.

Optionally, the sending module 23 is further configured to: indicate, by using a PDCCH, the first time-frequency resource used for transmitting the first data packet; or indicate, by using a PDCCH scrambled by using an SPS C-RNTI, the first time-frequency resource used for transmitting the first data packet.

Optionally, when the base station is applied to an SPS scenario, the sending module 23 is further configured to send an SPS activated indication message to the UE.

The base station provided in this embodiment may be configured to perform the method in Embodiment 1. Specific implementations and technical effects of the base station are similar to those of the method. Details are not described herein again.

It should be noted that the units in Embodiment 2 and Embodiment 3 may be separately disposed processing elements; or may be integrated into an apparatus in which an execution body is located, for example, a chip of a base station or UE; or may be stored, in a form of program code, in a memory of the apparatus in which an execution body is located. The program code is invoked by a processing element of the apparatus in which the execution body is located, to perform functions of the foregoing units. In addition, the units may be integrated together or may be implemented independently. The processing element herein may be a central processing unit (central processing unit, CPU for short), an application-specific integrated circuit (application-specific integrated circuit, ASIC for short), one or more integrated circuits configured to implement the foregoing method, for example, one or more microprocessors (digital signal processor, DSP for short), one or more field programmable gate arrays (field programmable gate array, FPGA for short), or a combination of a CPU and an ASIC.

FIG. 6 is a schematic structural diagram of UE according to Embodiment 4 of the present invention. As shown in FIG. 6, the UE of this embodiment includes a processor 31, a memory 32, a transmitter 33, and a receiver 34. The memory 32, the transmitter 33, and the receiver 34 are connected to and communicate with the processor 31 by using a system bus. The memory 32 is configured to store a computer program. The transmitter 33 is configured to send data to another device. The receiver 34 is configured to receive data sent by another device. The processor 31 is configured to run the program stored in the memory 32, so that the UE performs the following method.

Specifically, the processor 31 is configured to: when a first data packet and a second data packet are simultaneously transmitted, map the first data packet to a first time-frequency resource, and map the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources.

The transmitter 33 is configured to send the first data packet and the second data packet to a base station by using the time-frequency resource block.

The receiver 34 is configured to receive, on a PHICH resource, an ACK message or a NACK message sent by the base station.

The processor 31 is further configured to determine, based on the PHICH resource and the ACK message or the NACK message, whether the first data packet and the second data packet are correctly received.

Further, before mapping the first data packet to the first time-frequency resource and mapping the second data packet to the second time-frequency resource, the processor 31 is further configured to: generate a first check code based on an information sequence of the first data packet, generate a second check code based on an information sequence of the second data packet, add the first check code after the information sequence of the second data packet, and add the second check code after the information sequence of the second data packet. Optionally, the first check code and the second check code are CRC check codes, or the first check code and the second check code are parity check codes.

Optionally, when determining, based on the PHICH resource and the ACK message or the NACK message, whether the first data packet and the second data packet are correctly received, the processor 31 is specifically configured to:

when the PHICH resource is a PHICH resource corresponding to an index of a start physical resource block PRB of the first time-frequency resource, if the receiver receives the ACK message, determine that the first data packet and the second data packet are both correctly received; or if the receiver receives the NACK message, determine that the first data packet and the second data packet are both incorrectly received; or

when the PHICH resource is a second PHICH resource corresponding to an index of a start physical resource block PRB of the second time-frequency resource, if the receiver receives the ACK message, determine that the first data packet is correctly received and the second data packet is incorrectly received; or if the receiver receives the NACK message, determine that the first data packet is incorrectly received and the second data packet is correctly received; or

when the PHICH resource is a PHICH resource corresponding to an index of a start physical resource block PRB of the second time-frequency resource, if the receiver receives the ACK message, determine that the first data packet is incorrectly received and the second data packet is correctly received; or if the receiver receives the NACK message, determine that the first data packet is correctly received and the second data packet is incorrectly received.

Optionally, the receiver 34 is further configured to: receive the first time-frequency resource that is used for transmitting the first data packet and that is indicated by the base station by using a PDCCH; or receive the first time-frequency resource that is used for transmitting the first data packet and that is indicated by the base station by using a PDCCH scrambled by using an SPS C-RNTI.

Optionally, the transmitter 33 is specifically configured to: send the first data packet and the second data packet to the base station by using a TTI bundling resource.

Optionally, the receiver 34 is further configured to receive an SPS activated indication message sent by the base station. Correspondingly, the processor 31 is further configured to activate an SPS transmission mode based on the SPS activated indication message.

The UE provided in this embodiment may be configured to perform the method in Embodiment 1. Specific implementations and technical effects of the UE are similar to those of the method. Details are not described herein again.

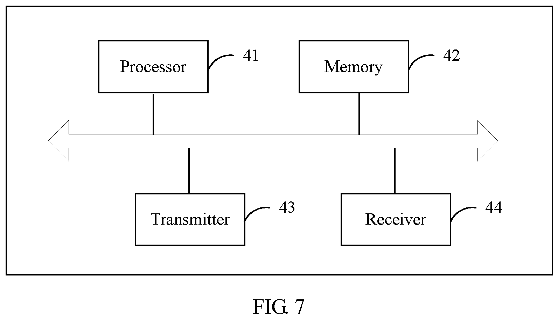

FIG. 7 is a schematic structural diagram of a base station according to Embodiment 5 of the present invention. As shown in FIG. 7, the base station of this embodiment includes a processor 41, a memory 42, a transmitter 43, and a receiver 44. The memory 42, the transmitter 43, and the receiver 44 are connected to and communicate with the processor 41 by using a system bus. The memory 42 is configured to store a computer program. The transmitter 43 is configured to send data to another device. The receiver 44 is configured to receive data sent by another device. The processor 41 is configured to run the program stored in the memory 42, so that the base station performs the following method.

Specifically, the receiver 44 is configured to: receive, on a first time-frequency resource, a first data packet sent by UE, and receive, on a second time-frequency resource, a second data packet sent by the UE, where the first time-frequency resource and the second time-frequency resource belong to a same time-frequency resource block, and the first time-frequency resource and the second time-frequency resource have a same time domain resource and non-overlapping frequency domain resources.

The processor 41 is configured to determine a receiving result of the first data packet and the second data packet.

The processor 41 is further configured to determine a physical hybrid automatic repeat request indicator channel PHICH resource based on the receiving result.

The transmitter 43 is configured to send, based on the receiving result, an ACK message or a NACK message by using the PHICH resource.

The memory 42 is further configured to: after the receiver 44 receives the first data packet and the second data packet, store the first data packet in a first HAQR buffer of a HARQ process, and store the second data packet in a second HAQR buffer of the HARQ process.

Optionally, when determining the receiving result of the first data packet and the second data packet, the processor 41 is specifically configured to: separately decode the received first data packet and second data packet; obtain a first check code from the decoded first data packet, and obtain a second check code from the decoded second data packet; and verify, based on the first check code, whether the first data packet is correctly received, and verify, based on the second check code, whether the second data packet is correctly received.

Optionally, when determining the physical hybrid automatic repeat request indicator channel PHICH resource based on the receiving result, the processor 41 is specifically configured to: when the first data packet and the second data packet are both correctly received or are both incorrectly received, determine the PHICH resource based on an index of a start physical resource block PRB of the first time-frequency resource. Correspondingly, the transmitter 43 is specifically configured to: when the first data packet and the second data packet are both correctly received, send the ACK message by using the PHICH resource; or when the first data packet and the second data packet are both incorrectly received, send the NACK message by using the PHICH resource.

Optionally, when determining the physical hybrid automatic repeat request indicator channel PHICH resource based on the receiving result, the processor 41 is specifically configured to: when the first data packet is correctly received and the second data packet is incorrectly received, or when the first data packet is incorrectly received and the second data packet is correctly received, determine the PHICH resource based on an index of a start physical resource block PRB of the second time-frequency resource. Correspondingly, the transmitter 43 is specifically configured to: when the first data packet is correctly received and the second data packet is incorrectly received, send the ACK message by using the PHICH resource, or when the first data packet is incorrectly received and the second data packet is correctly received, send the NACK message by using the PHICH resource; or when the first data packet is incorrectly received and the second data packet is correctly received, send the ACK message by using the PHICH resource, or when the first data packet is correctly received and the second data packet is incorrectly received, send the NACK message by using the PHICH resource.

Optionally, the transmitter 43 is further configured to: indicate, by using a PDCCH, the first time-frequency resource used for transmitting the first data packet; or indicate, by using a PDCCH scrambled by using an SPS C-RNTI, the first time-frequency resource used for transmitting the first data packet.

Optionally, the transmitter 43 is further configured to send an SPS activated indication message to the UE.

The base station provided in this embodiment may be configured to perform the method in Embodiment 1. Specific implementations and technical effects of the base station are similar to those of the method. Details are not described herein again.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An uplink transmission method, comprising:

   when a first data packet and a second data packet are simultaneously transmitted, mapping, by user equipment UE, the first data packet to a first time-frequency resource, and mapping the second data packet to a second time-frequency resource, wherein the first time-frequency resource and the second time-frequency resource belong to a same time-frequency resource block, and the first time-frequency resource and the second time-frequency resource have a same time domain resource and non-overlapping frequency domain resources; and sending, by the UE, the first data packet and the second data packet to a base station by using the time-frequency resource block.

2. The method according to claim 1, further comprising:

   receiving, by the UE on a physical hybrid automatic repeat request indicator channel PHICH resource, an acknowledgement ACK message or a negative acknowledgement NACK message sent by the base station; and determining, by the UE based on the PHICH resource and the ACK message or the NACK message, whether the first data packet and the second data packet are correctly received.

3. The method according to claim 2, wherein the determining, by the UE based on the PHICH resource and the ACK message or the NACK message, whether the first data packet and the second data packet are correctly received comprises:
   when the PHICH resource is a PHICH resource corresponding to an index of a start physical resource block PRB of the first time-frequency resource, if the UE receives the ACK message, determining that the first data packet and the second data packet are both correctly received; or if the UE receives the NACK message, determining that the first data packet and the second data packet are both incorrectly received.

4. The method according to claim 2, wherein the determining, by the UE based on the PHICH resource and the ACK message or the NACK message, whether the first data packet and the second data packet are correctly received comprises:
when the PHICH resource is a second PHICH resource corresponding to an index of a start physical resource block PRB of the second time-frequency resource, if the UE receives the ACK message, determining that the first data packet is correctly received and the second data packet is incorrectly received; or if the UE receives the NACK message, determining that the first data packet is incorrectly received and the second data packet is correctly received.

5. The method according to claim 2, wherein the determining, by the UE based on the PHICH resource and the ACK message or the NACK message, whether the first data packet and the second data packet are correctly received comprises:
when the PHICH resource is a PHICH resource corresponding to an index of a start physical resource block PRB of the second time-frequency resource, if the UE receives the ACK message, determining that the first data packet is incorrectly received and the second data packet is correctly received; or if the UE receives the NACK message, determining that the first data packet is correctly received and the second data packet is incorrectly received.

6. The method according to any one of claims 1 to 5, wherein before the mapping, by UE, the first data packet to a first time-frequency resource, the method further comprises:
receiving, by the UE, the first time-frequency resource that is used for transmitting the first data packet and that is indicated by the base station by using a physical downlink control channel PDCCH.

7. The method according to any one of claims 1 to 5, wherein before the mapping, by UE, the first data packet to a first time-frequency resource, the method further comprises:
receiving, by the UE, the first time-frequency resource that is used for transmitting the first data packet and that is indicated by the base station by using a physical downlink control channel PDCCH scrambled by a semi-persistent scheduling cell radio network temporary identifier SPS C-RNTI.

8. The method according to any one of claims 1 to 7, wherein the sending, by the UE, the first data packet and the second data packet to a base station by using the time-frequency resource block comprises:
sending, by the UE, the first data packet and the second data packet to the base station by using a transmission time interval TTI bundling resource.

9. The method according to any one of claims 1 to 8, further comprising:

receiving, by the UE, a semi-persistent scheduling SPS activated indication message sent by the base station; and
activating, by the UE, an SPS transmission mode based on the SPS activated indication message.

10. An uplink transmission method, comprising:

receiving, by a base station on a first time-frequency resource, a first data packet sent by user equipment UE, and receiving, on a second time-frequency resource, a second data packet sent by the UE, wherein the first time-frequency resource and the second time-frequency resource belong to a same time-frequency resource block, and the first time-frequency resource and the second time-frequency resource have a same time domain resource and non-overlapping frequency domain resources;
determining, by the base station, a receiving result of the first data packet and the second data packet;
determining, by the base station, a physical hybrid automatic repeat request indicator channel PHICH resource based on the receiving result; and
sending, by the base station based on the receiving result, an acknowledgement ACK message or a negative acknowledgement NACK message by using the PHICH resource.

11. The method according to claim 10, wherein the determining, by the base station, a PHICH resource based on the receiving result comprises:

when the first data packet and the second data packet are both correctly received or are both incorrectly received, determining, by the base station, the PHICH resource based on an index of a start physical resource block PRB of the first time-frequency resource; and
the sending, by the base station based on the receiving result, an ACK message or a NACK message by using the PHICH resource comprises:

when the first data packet and the second data packet are both correctly received, sending the ACK message by using the PHICH resource; or
when the first data packet and the second data packet are both incorrectly received, sending the NACK message by using the PHICH resource.

12. The method according to claim 10, wherein the determining, by the base station, a PHICH resource based on the receiving result comprises:

when the first data packet is correctly received and the second data packet is incorrectly received, or when the first data packet is incorrectly received and the second data packet is correctly received, determining, by the base station, the PHICH resource based on an index of a start physical resource block PRB of the second time-frequency resource; and
the sending, by the base station based on the receiving result, an ACK message or a NACK message by using the PHICH resource comprises:

when the first data packet is correctly received and the second data packet is incorrectly received, sending the ACK message by using the PHICH resource; or
when the first data packet is incorrectly received and the second data packet is correctly received, sending the NACK message by using the PHICH resource.

13. The method according to claim 10, wherein the determining, by the base station, a PHICH resource based on the receiving result comprises:

when the first data packet is correctly received and the second data packet is incorrectly received, or when the first data packet is incorrectly received and the second data packet is correctly received, determining, by the base station, the PHICH resource based on an index of a start physical resource block PRB of the second time-frequency resource; and
the sending, by the base station based on the receiving result, an ACK message or a NACK message by using the PHICH resource comprises:

when the first data packet is incorrectly received and the second data packet is correctly received, sending the ACK message by using the PHICH resource; or
when the first data packet is correctly received and the second data packet is incorrectly received, sending the NACK message by using the PHICH resource.

14. The method according to any one of claims 10 to 13, wherein before the receiving, by a base station on a first time-frequency resource, a first data packet sent by UE, the method further comprises:
indicating, by the base station by using a physical downlink control channel PDCCH, the first time-frequency resource used for transmitting the first data packet.

15. The method according to any one of claims 10 to 13, wherein before the receiving, by a base station on a first time-frequency resource, a first data packet sent by UE, the method further comprises:
indicating, by the base station by using a physical downlink control channel PDCCH scrambled by using a semi-persistent scheduling cell radio network temporary identifier SPS C-RNTI, the first time-frequency resource used for transmitting the first data packet.

16. The method according to any one of claims 10 to 15, further comprising:
sending, by the base station, a semi-persistent scheduling SPS activated indication message to the UE.

17. User equipment UE, comprising:

a processor, configured to: when a first data packet and a second data packet are simultaneously transmitted, map the first data packet to a first time-frequency resource, and map the second data packet to a second time-frequency resource, wherein the first time-frequency resource and the second time-frequency resource belong to a same time-frequency resource block, and the first time-frequency resource and the second time-frequency resource have a same time domain resource and non-overlapping frequency domain resources; and
a transmitter, configured to send the first data packet and the second data packet to a base station by using the time-frequency resource block.

18. The UE according to claim 17, further comprising:

a receiver, configured to receive, on a physical hybrid automatic repeat request indicator channel PHICH resource, an acknowledgement ACK message or a negative acknowledgement NACK message sent by the base station, wherein
the processor is further configured to determine, based on the PHICH resource and the ACK message or the NACK message, whether the first data packet and the second data packet are correctly received.

19. The UE according to claim 18, wherein the processor is specifically configured to:
when the PHICH resource is a PHICH resource corresponding to an index of a start physical resource block PRB of the first time-frequency resource, if the receiver receives the ACK message, determine that the first data packet and the second data packet are both correctly received; or if the receiver receives the NACK message, determine that the first data packet and the second data packet are both incorrectly received.

20. The UE according to claim 18, wherein the processor is specifically configured to:
when the PHICH resource is a second PHICH resource corresponding to an index of a start physical resource block PRB of the second time-frequency resource, if the receiver receives the ACK message, determine that the first data packet is correctly received and the second data packet is incorrectly received; or if the receiver receives the NACK message, determine that the first data packet is incorrectly received and the second data packet is correctly received.

21. The UE according to claim 18, wherein the processor is specifically configured to:
when the PHICH resource is a PHICH resource corresponding to an index of a start physical resource block PRB of the second time-frequency resource, if the receiver receives the ACK message, determine that the first data packet is incorrectly received and the second data packet is correctly received; or if the receiver receives the NACK message, determine that the first data packet is correctly received and the second data packet is incorrectly received.

22. The UE according to any one of claims 18 to 21, wherein
the receiver is further configured to: receive the first time-frequency resource that is used for transmitting the first data packet and that is indicated by the base station by using a physical downlink control channel PDCCH; or receive the first time-frequency resource that is used for transmitting the first data packet and that is indicated by the base station by using a PDCCH scrambled by using a semi-persistent scheduling cell radio network temporary identifier SPS C-RNTI.

23. The UE according to claim 17, further comprising:

a receiver, configured to: receive the first time-frequency resource that is used for transmitting the first data packet and that is indicated by the base station by using a physical downlink control channel PDCCH; or receive the first time-frequency resource that is used for transmitting the first data packet and that is indicated by the base station by using a PDCCH scrambled by using a semi-persistent scheduling cell radio network temporary identifier SPS C-RNTI.

24. The UE according to any one of claims 17 to 23, wherein the transmitter is specifically configured to:
send the first data packet and the second data packet to the base station by using a transmission time interval TTI bundling resource.

25. The UE according to any one of claims 18 to 23, wherein
the receiver is further configured to receive a semi-persistent scheduling SPS activated indication message sent by the base station; and
the processor is further configured to activate an SPS transmission mode based on the SPS activated indication message.

26. Abase station, comprising:

a receiver, configured to: receive, on a first time-frequency resource, a first data packet sent by user equipment UE, and receive, on a second time-frequency resource, a second data packet sent by the UE, wherein the first time-frequency resource and the second time-frequency resource belong to a same time-frequency resource block, and the first time-frequency resource and the second time-frequency resource have a same time domain resource and non-overlapping frequency domain resources;
a processor, configured to determine a receiving result of the first data packet and the second data packet, wherein
the processor is further configured to determine a physical hybrid automatic repeat request indicator channel PHICH resource based on the receiving result; and
a transmitter, configured to send, based on the receiving result, an acknowledgement ACK message or a negative acknowledgement NACK message by using the PHICH resource.

27. The base station according to claim 26, wherein the processor is specifically configured to:

when the first data packet and the second data packet are both correctly received or are both incorrectly received, determine the PHICH resource based on an index of a start physical resource block PRB of the first time-frequency resource; and
when the first data packet and the second data packet are both correctly received, send the ACK message by using the PHICH resource; or
when the first data packet and the second data packet are both incorrectly received, send the NACK message by using the PHICH resource.

28. The base station according to claim 26, wherein the processor is specifically configured to:

when the first data packet is correctly received and the second data packet is incorrectly received, or when the first data packet is incorrectly received and the second data packet is correctly received, determine the PHICH resource based on an index of a start physical resource block PRB of the second time-frequency resource; and
when the first data packet is correctly received and the second data packet is incorrectly received, send the ACK message by using the PHICH resource; or
when the first data packet is incorrectly received and the second data packet is correctly received, send the NACK message by using the PHICH resource.

29. The base station according to claim 26, wherein the processor is specifically configured to:

when the first data packet is correctly received and the second data packet is incorrectly received, or when the first data packet is incorrectly received and the second data packet is correctly received, determine the PHICH resource based on an index of a start physical resource block PRB of the second time-frequency resource; and
when the first data packet is incorrectly received and the second data packet is correctly received, send the ACK message by using the PHICH resource; or
when the first data packet is correctly received and the second data packet is incorrectly received, send the NACK message by using the PHICH resource.

30. The base station according to any one of claims 26 to 29, wherein the transmitter is further configured to:
indicate, by using a physical downlink control channel PDCCH, the first time-frequency resource used for transmitting the first data packet.

31. The base station according to any one of claims 26 to 29, wherein the transmitter is further configured to:
indicate, by using a physical downlink control channel PDCCH scrambled by using a semi-persistent scheduling cell radio network temporary identifier SPS C-RNTI, the first time-frequency resource used for transmitting the first data packet.

32. The base station according to any one of claims 26 to 31, wherein the transmitter is further configured to:
send a semi-persistent scheduling SPS activated indication message to the UE.

FIG. 1

When a first data packet and a second data packet are simultaneously transmitted, UE maps the first data packet to a first time-frequency resource, and maps the second data packet to a second time-frequency resource, where the first time-frequency resource and the second time-frequency resource belong to a same time-frequency resource block, and the first time-frequency resource and the second time-frequency resource have a same time domain resource and non-overlapping frequency domain resources — 101

The UE sends the first data packet and the second data packet to a base station by using the time-frequency resource block — 102

The base station receives the first data packet on the first time-frequency resource, and receives the second data packet on the second time-frequency resource — 103

The base station determines a receiving result of the first data packet and the second data packet — 104

The base station determines a PHICH resource based on the receiving result — 105

The base station sends, based on the receiving result, an ACK message or a NACK message by using the PHICH resource — 106

The UE receives, on the PHICH resource, the ACK message or the NACK message sent by the base station — 107

The UE determines, based on the PHICH resource and the ACK message or the NACK message, whether the first data packet and the second data packet are correctly received — 108

FIG. 2

FIG. 3

FIG. 4

```
┌─────────────────────────┐
│    Receiving module     │──── 21
└─────────────────────────┘
             │
┌─────────────────────────┐
│    Processing module    │──── 22
└─────────────────────────┘
             │
┌─────────────────────────┐
│     Sending module      │──── 23
└─────────────────────────┘
```

FIG. 5

```
┌──────────────────────────────────────────────────────────┐
│  ┌──────────────┐            ┌──────────────┐             │
│  │   Processor  │── 31       │    Memory    │── 32        │
│  └──────────────┘            └──────────────┘             │
│         │                          │                      │
│  ◄══════╧══════════════════════════╧═════════════════►    │
│         │                          │                      │
│  ┌──────────────┐            ┌──────────────┐             │
│  │ Transmitter  │── 33       │   Receiver   │── 34        │
│  └──────────────┘            └──────────────┘             │
└──────────────────────────────────────────────────────────┘
```

FIG. 6

FIG. 7

# INTERNATIONAL SEARCH REPORT

| International application No. |
| --- |
| **PCT/CN2016/087224** |

**A. CLASSIFICATION OF SUBJECT MATTER**

H04J 11/00 (2006.01) i; H04L 1/18 (2006.01) i; H04W 28/04 (2009.01) i

According to International Patent Classification (IPC) or to both national classification and IPC

**B. FIELDS SEARCHED**

Minimum documentation searched (classification system followed by classification symbols)

H04L; H04W; H04J; H04B

Documentation searched other than minimum documentation to the extent that such documents are included in the fields searched

Electronic data base consulted during the international search (name of data base and, where practicable, search terms used)

CNABS, CNTXT, CNKI, VEN: uplink transmission, data packet, hybrid automatic retransmission indicator channel, confirmation, deny, SPS, ACK, NACK, PHICH, uplink, time frequency, second, another, Physical Hybrid ARQ Indicator Channel, Acknowledge/Negative Acknowledge, semi persistent scheduling

**C. DOCUMENTS CONSIDERED TO BE RELEVANT**

| Category* | Citation of document, with indication, where appropriate, of the relevant passages | Relevant to claim No. |
| --- | --- | --- |
| X | CN 102045841 A (HUAWEI TECHNOLOGIES CO., LTD.), 04 May 2011 (04.05.2011), claims 1-16, description, paragraph [0066], and figures 8 and 9 | 1, 6-9, 17, 23, 24 |
| Y | CN 102045841 A (HUAWEI TECHNOLOGIES CO., LTD.), 04 May 2011 (04.05.2011), claims 1-16, description, paragraph [0066], and figures 8 and 9 | 2-5, 10-16, 18-22, 25-32 |
| Y | CN 102149131 A (ZTE CORP.), 10 August 2011 (10.08.2011), description, paragraph 0006 | 2-5, 10-16, 18-22, 25-32 |
| A | CN 105451346 A (HUAWEI TECHNOLOGIES CO., LTD.), 30 March 2016 (30.03.2016), the whole document | 1-32 |
| A | CN 101621358 A (SHANGHAI HUAWEI TECHNOLOGIES CO., LTD.), 06 January 2010 (06.01.2010), claims 1-16, description, page 6, line 22 to page 23, line 1 | 1-32 |
| A | WO 2013048070 A1 (LG ELECTRONICS INC.), 04 April 2013 (04.04.2013), the whole document | 1-32 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 March 2017 (10.03.2017) | **10 April 2017 (10.04.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**SUN, Yufang**<br><br>Telephone No.: (86-10) **62089463** |
| --- | --- |

Form PCT/ISA/210 (second sheet) (July 2009)

## INTERNATIONAL SEARCH REPORT
### Information on patent family members

| | | International application No. |
| --- | --- | --- |
| | | **PCT/CN2016/087224** |

| Patent Documents referred in the Report | Publication Date | Patent Family | Publication Date |
| --- | --- | --- | --- |
| CN 102045841 A | 04 May 2011 | CN 102045841 B | 18 December 2013 |
| CN 102149131 A | 10 August 2011 | CN 102149131 B | 20 January 2016 |
| CN 105451346 A | 30 March 2016 | WO 2015188698 A1 | 17 December 2015 |
| CN 101621358 A | 06 January 2010 | CN 101621358 B | 02 January 2013 |
| WO 2013048070 A1 | 04 April 2013 | US 2014321422 A1 | 30 October 2014 |

Form PCT/ISA/210 (patent family annex) (July 2009)